Europäisches Patentamt

European Patent Office

Office européen des brevets

(19)

(11) **EP 0 633 181 B1**

(12) **FASCICULE DE BREVET EUROPEEN**

(45) Date de publication et mention
de la délivrance du brevet:
**11.12.1996 Bulletin 1996/50**

(51) Int. Cl.⁶: $B62D\ 11/10$, $F16H\ 3/66$

(21) Numéro de dépôt: **94401008.1**

(22) Date de dépôt: **06.05.1994**

(54) **système de direction pour véhicule automobile, du type agissant par différence de vitesse entre les roues de gauche et de droite du véhicule**

Kraftfahrzeuglenkung durch Herbeiführen eines Geschwindigkeitsunterschiedes zwischen rechts- und linksseitigen Rädern

Motor vehicle steering through generation of a speet difference between left and right wheels

(84) Etats contractants désignés:
**CH DE GB LI**

(30) Priorité: **23.06.1993 FR 9307610**

(43) Date de publication de la demande:
**11.01.1995 Bulletin 1995/02**

(73) Titulaire: **GIAT Industries**
**F-78034 Versailles Cédex (FR)**

(72) Inventeurs:
• **Debret, Patrice**
**F-78180 Montigny Le Bretonneux (FR)**
• **Tosi, Pierre**
**F-91160 Ballainvilliers (FR)**

(56) Documents cités:
**EP-A- 0 024 100**      **DE-C- 1 043 832**
**FR-A-  973 222**       **FR-A- 2 602 481**
**FR-A- 2 606 713**      **FR-A- 2 671 043**
**GB-A- 1 308 009**      **GB-A- 2 034 831**
**GB-A- 2 076 912**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne un système de direction pour véhicule automobile, du type agissant par différence de vitesse entre les roues de gauche et de droite du véhicule, tel que défini dans le préambule de la revendication 1 et connu par exemple du document GB-A-2 034 831.

Ce type de système de direction est utilisé sur des véhicule à roues non orientables et sur des véhicules chenillés, ainsi que sur des véhicules dont les roues orientables ou directrices ont un débattement angulaire limité pour conserver une largeur de caisse aussi importante que possible au niveau des roues et augmenter la capacité de transport du véhicule, auquel cas un système classique de direction par orientation des roues peut être associé à un système de direction par différence de vitesse entre les roues de gauche et les roues de droite, pour obtenir des rayons de braquage faibles du véhicule en dépit du débattement angulaire limité des roues directrices et orientables.

Dans les systèmes de direction par différence de vitesse, on a déjà proposé d'utiliser un différentiel à superposition dont l'arbre neutre est relié à des moyens hydrauliques de motorisation, pour augmenter la vitesse des roues du côté extérieur au virage et diminuer simultanément celle des roues du côté intérieur au virage (Brevet Français 2 671 043).

Un tel système permet d'obtenir des rayons de braquage faibles, voire nuls, le véhicule pouvant virer sur place lorsque ses roues de gauche et celles de droite sont entraînées en rotation dans des sens contraires. Toutefois, ce système connu est assez complexe, coûteux et encombrant et il consomme pour son fonctionnement une quantité d'énergie relativement élevée du fait de son mauvais rendement aux vitesses de déplacement faibles du véhicule.

On a également déjà utilisé, notamment dans les chars de combat, un différentiel piloté mécaniquement et associé à des freins montés sur ses arbres de sortie de gauche et de droite respectivement. Lorsqu'on serre un frein sur un arbre de sortie du différentiel, on diminue la vitesse de la chenille entraînée par cet arbre de sortie et on augmente simultanément celle de la chenille entraînée par l'autre arbre de sortie, en provoquant ainsi le virage du véhicule. Cependant, la puissance dissipée dans un tel système est très élevée lorsque le rayon de braquage est de valeur faible ou sensiblement nul. En outre, comme les arbres de sortie sont reliés dans le différentiel directement aux pignons solaires (ou planétaires selon la terminologie utilisée), on est amené à surdimensionner ces derniers pour assurer la transmission de couples élevés, ce qui se traduit par une augmentation sensible de l'encombrement global du différentiel.

L'invention a pour objet un système de direction du type à différence de vitesse, qui ne soit pas soumis aux inconvénients précités.

Elle propose à cet effet un système de direction pour véhicule automobile, du type agissant par différence de vitesse entre des roues de gauche et de droite du véhicule et comprenant un différentiel piloté comportant un arbre d'entrée entraîné par des moyens moteurs de propulsion du véhicule et deux arbres de sortie qui sont reliés à des roues de gauche et à des roues de droite respectivement du véhicule, ainsi que des freins de gauche et de droite agissant indirectement sur les rotations des arbres de sortie précités, caractérisé en ce que ce différentiel comprend trois trains parallèles d'engrenages planétaires comprenant chacun un pignon planétaire, des pignons satellites et une couronne extérieure, les pignons planétaires de ces trois trains d'engrenages étant solidaires en rotation les uns des autres et reliés fixement à un arbre sur lequel agit l'un des freins précités, les moyens moteurs de propulsion étant reliés aux porte-satellites d'un premier et d'un deuxième de ces trains d'engrenages dont les couronnes extérieures sont reliées aux arbres de sortie précités, l'autre frein agissant sur un arbre entraîné par la couronne extérieure du troisième train d'engrenages.

Un tel système de direction présente de nombreux avantages par rapport aux systèmes semblables déjà connus :

- le différentiel est moins encombrant que ceux utilisés dans les systèmes antérieurs, de fait que ce sont les couronnes extérieures de deux trains d'engrenages planétaires qui sont reliées aux arbres de sortie et qui peuvent transmettre des couples relativement élevés, en raison de leur diamètre plus important que celui des pignons planétaires,
- à encombrement égal, le différentiel du système selon l'invention est plus solide et plus robuste que les différentiels des systèmes antérieurs,
- pour une même robustesse ou une même solidité, le différentiel du système selon l'invention est moins encombrant que les différentiels des systèmes antérieurs,
- la puissance mécanique dissipée dans le système selon l'invention pour les rayons de braquage de valeur faible est extrêmement faible ou quasi nulle de sorte que le rendement global du système selon l'invention est élevé.

Selon une autre caractéristique de l'invention, le premier des trains d'engrenages précités est du type "Ravigneaux", comprenant deux séries de pignons satellites en prise, portés par un même porte-satellite et interposés entre le pignon planétaire et la couronne extérieure de ce train d'engrenages.

L'utilisation d'un train d'engrenages du type Ravigneaux permet notamment d'obtenir des rapports de réduction ou de transmission que l'on ne pourrait obtenir avec des trains d'engrenages du type plan.

Selon encore une autre caractéristique de l'invention, ce système comprend des moyens pour désolidariser les moyens moteurs du porte-satellite des deux premiers trains et pour les relier à l'arbre portant les pignons planétaires, ce qui permet de faire tourner les arbres de sortie en sens contraire l'un de l'autre.

De préférence, le système comprend également des moyens d'immobilisation en rotation du porte-satellite des deux premiers trains d'engrenages, ce qui permet un virage sur place du véhicule.

De préférence, les moyens précités utilisés pour désolidariser le porte-satellite des moyens moteurs et pour l'immobiliser en rotation comprennent des accouplements du type à crabots.

Le système selon l'invention permet alors d'effectuer des virages sur place avec un rayon de braquage nul, par pivotement autour du centre du véhicule ou d'un point voisin de ce centre.

L'invention sera mieux comprise et d'autres caractéristiques, détails et avantages de celle-ci apparaitront plus clairement à la lecture de la description qui suit, faite à titre d'exemple en référence aux dessins annexés dans lesquels :

la figure 1 représente schématiquement un système de direction selon l'invention;
la figure 2 est une vue partielle d'une variante de réalisation de ce système.

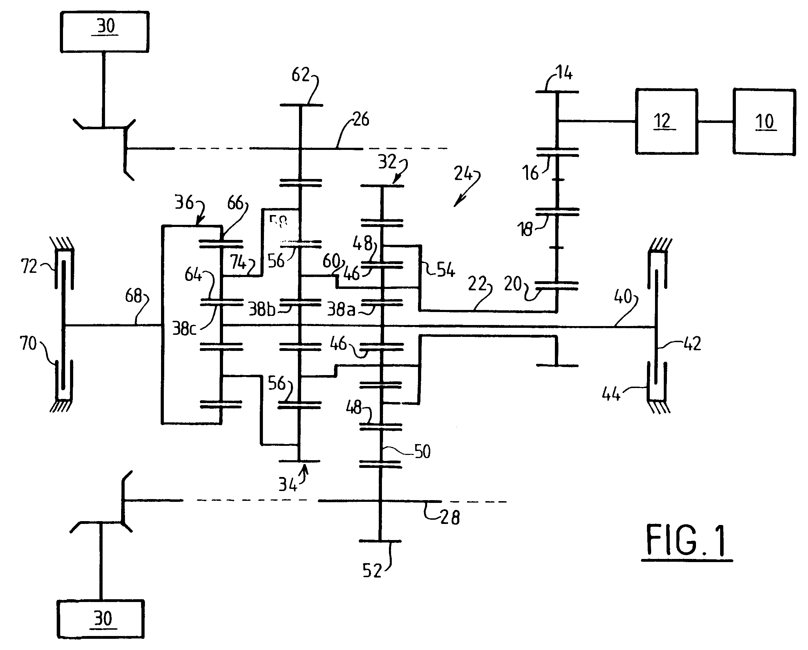

On fera tout d'abord référence à la figure 1, où l'on a représenté schématiquement les composants essentiels d'un système de direction selon l'invention, qui peut être destiné par exemple à un véhicule blindé léger à usage militaire, comprenant un ou plusieurs trains de roues directrices et orientables ayant un débattement angulaire limité, le système selon l'invention étant alors dans ce cas associé à un système classique de direction par orientation des roues.

En figure 1, la référence 10 désigne un moteur à combustion interne dont l'arbre de sortie est relié par l'intermédiaire d'un embrayage, non représenté, à une boîte de vitesses 12 reliée par un train de pignons 14, 16, 18, 20 à l'arbre d'entrée 22 d'un différentiel 24 à deux arbres de sortie 26 et 28 de droite et de gauche respectivement qui sont reliés aux arbres des roues motrices 30 du véhicule par des moyens classiques tels que des joints à la cardan, des pignons de renvoi à denture conique, etc.

Le différentiel 24 comprend trois trains parallèles d'engrenages planétaires 32, 34 et 36 comprenant chacun un pignon planétaire, des pignons satellites et une couronne extérieure, les pignons planétaires 38 de ces trois trains d'engrenages étant solidaires les uns des autres en rotation et portés fixement par un même arbre 40 s'étendant à l'intérieur de l'arbre tubulaire d'entrée 22 et portant à l'extérieur du différentiel un disque 42 sur lequel peut agir un frein 44. Comme on le voit bien sur la figure 1, les trois pignons planétaires 38 sont coaxiaux et peuvent être identiques.

Le premier train 32 d'engrenages est du type "Ravigneaux" et comprend une première série de pignons satellites 46 en prise d'une part avec le pignon planétaire 38a et d'autre part avec une deuxième série de pignons satellites 48, qui sont eux-mêmes en prise avec la denture intérieure d'une couronne extérieure 50.

Cette couronne extérieure 50 comporte une denture extérieure en prise avec un pignon 52 monté fixement sur l'arbre de sortie 28 du différentiel.

Les deux séries de pignons satellites 46 et 48 du premier train d'engrenages 32 sont montés libres en rotation sur le même porte-satellite 54 qui est solidaire en rotation de l'arbre d'entrée 22 du différentiel.

Le deuxième train 34 d'engrenages planétaires est du type plan et comprend une série de pignons satellites 56 qui engrènent avec le pignon planétaire 38b d'une part et avec la denture intérieure d'une couronne extérieure 58 d'autre part. Les pignons satellites 56 sont montés libres en rotation sur un porte-satellite 60 qui est solidaire en rotation du porte-satellite 54 du premier train d'engrenages 32.

La couronne extérieure 58 du deuxième train d'engrenages 34 comporte une denture extérieure qui engrène avec un pignon 62 monté fixement sur l'arbre de sortie 26 du différentiel.

Le troisième train 36 d'engrenages est également un engrenage planétaire du type plan, comprenant une série de pignons satellites 64 qui sont en prise avec le pignon planétaire 38c et avec la denture intérieure d'une couronne extérieure 66 solidaire en rotation d'un arbre axial 68 portant un disque 70 sur lequel peut agir un frein 72. Les pignons satellites 64 du troisième train sont montés libres en rotation sur un porte-satellite 74 qui est solidaire en rotation de la couronne extérieure 58 du deuxième train d'engrenages 34.

Ce système fonctionne de la façon suivante :

lorsqu'aucun des freins 44 et 72 n'est serré, le différentiel 24 se comporte comme un différentiel classique et transmet des couples de rotation égaux aux roues de gauche et aux roues de droite du véhicule, en adaptant les vitesses de rotation à gauche et à droite à la trajectoire du véhicule.

Lorsqu'un des freins 44, 72 est serré, par exemple le frein 44 pour immobiliser le disque 42 en rotation, les vitesses de rotation des roues de gauche et des roues de droite du véhicule obéissent alors aux relations suivantes :

$$\omega_g = \omega \, (1 - k)$$

$$\omega_d = \omega \, (1 + k)$$

avec

$$k = \frac{n(66)/n(38c)}{1 + n(66)/n(38c) + n(58)/n(38b)}$$

ω étant la vitesse commune de rotation des roues en ligne droite quand les freins 44, 72 sont desserrés,

n(66) étant le nombre de dents de la couronne extérieure du troisième train 36,

n(38c) et n(38b) étant les nombres de dents du pignon planétaire du troisième train 36 et du deuxième train 34, respectivement,

n(58) étant le nombre de dents de la denture interne de la couronne extérieure du deuxième train 34.

Il faut de plus que les deux relations ci-dessous soient satisfaites :

$$n(58)/n(38b) = n(50)/n(38a)$$

$$1 + n(58)/n(38b) = [-1 + n(50)/n(38a)] \, n(66)/n(38c)$$

n(38a) étant le nombre de dents du pignon planétaire du premier train 32,

n(50) étant le nombre de dents de la denture intérieure de la couronne extérieure du premier train 32.

Il en résulte que, quand on serre le frein 44 pour bloquer la rotation du disque 42, la vitesse de rotation de l'arbre de sortie 28 du différentiel est diminuée d'un certaine quantité, et la vitesse de rotation de l'autre arbre de sortie 26 du différentiel est augmentée de la même quantité, de sorte que le véhicule tourne du côté des roues 30 entraînées par l'arbre de sortie 28.

Le système de la figure 1 présente l'avantage de consommer une puissance sensiblement nulle lorsqu'on fait tourner le véhicule sur son rayon de braquage le plus court correspondant au serrage complet d'un des freins 44, 72.

Par contre, ce système ne permet pas de réduire le rayon de braquage jusqu'à une valeur sensiblement nulle, le serrage de l'un des freins 44, 72 se traduisant par une diminution de la vitesse de rotation d'un arbre de sortie 26, 28, mais pas par le blocage en rotation de cet arbre de sortie. Il n'est pas non plus possible d'entraîner les roues de gauche et celles de droite en rotation dans des sens contraires. En conséquence, le véhicule ne peut virer ou pivoter sur place.

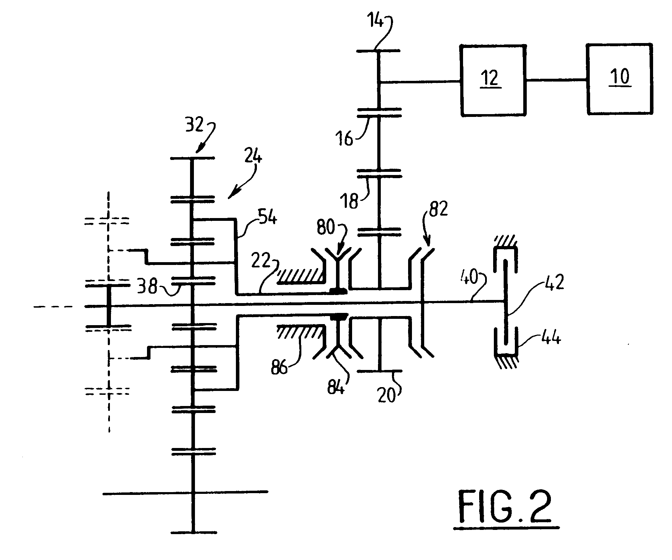

La variante de réalisation représentée en figure 2 permet de façon simple de faire tourner le véhicule sensiblement autour de son centre.

Le système de direction conforme à cette variante de réalisation comprend tous les moyens du système de la figure 1, bien que ces derniers n'aient pas tous été représentés en figure 2, et comprend de plus des moyens permettant d'une part de désolidariser l'arbre d'entrée 22 du différentiel des moyens moteurs de propulsion du véhicule et d'immobiliser en rotation cet arbre d'entrée 22 et d'autre part de relier aux moyens moteurs de propulsion l'arbre 40 portant les pignons planétaires des trois trains d'engrenages du différentiel.

Dans l'exemple représenté, ces moyens comprennent des accouplements à crabots désignés par les références 80 et 82 respectivement.

Plus précisément, ces crabots sont destinés à ce que le dernier pignon 20 du train d'engrenages prévu entre la sortie de la boîte de vitesse et l'entrée du différentiel, puisse être relié soit à l'arbre d'entrée 22, soit à l'arbre 40 portant les pignons planétaires 38 du différentiel et le disque 42 sur lequel agit le frein 44.

Pour cela, on prévoit par exemple sur l'arbre 22 d'entrée du différentiel un crabot double 84 que l'on peut amener en prise, soit avec le pignon 20, soit avec une partie fixe 86 du véhicule. Par ailleurs, l'autre accouplement à crabots 82 comprend deux disques dentés pouvant venir en prise l'un avec l'autre ou être écartés l'un de l'autre, l'un de ces disques étant solidaire en rotation de l'arbre 40 tandis que l'autre est solidaire en rotation du pignon 20.

Le fonctionnement de cette variante de réalisation du système selon l'invention est le suivant :

lorsque l'arbre d'entrée 22 du différentiel est en prise avec le pignon 20 par l'intermédiaire du crabot 80, et que l'accouplement à crabots 82 est inactif, l'arbre d'entrée 22 du différentiel est entraîné en rotation par le groupe moto-propulseur du véhicule, exactement comme dans le système représenté en figure 1.

Si on découple l'arbre d'entrée 22 du différentiel du pignon 20 par l'intermédiaire de l'accouplement à crabots 80 et que l'on relie le pignon 20 à l'arbre 40 par l'intermédiaire de l'accouplement à crabots 82, le porte-satellite 54 devient libre en rotation et l'arbre 40 forme l'élément moteur d'entrée du différentiel. On peut alors transmettre aux couronnes extérieures 50 et 58 des trains d'engrenages 32 et 34 des couples qui sont égaux en valeur absolue, mais de sens contraire. Il en résulte que les roues de gauche et celles de droite du véhicule seront entraînées en sens contraire, et que le véhicule pourra pivoter sur lui-même avec un rayon de braquage proche d'une valeur nulle.

Pour améliorer les conditions de pivotement et entraîner les roues de gauche et les roues de droite à des vitesses de rotation parfaitement égales mais de sens opposé, il suffit de lier l'arbre d'entrée 22 du différentiel à la partie fixe 86 du véhicule par l'intermédiaire de l'accouplement à crabots 80, ce qui permet d'immobiliser en rotation le porte-satellite 54. Le rayon de braquage est alors nul et le véhicule peut virer sur place.

Comme le système de la figure 1, celui de la figure 2 a un très bon rendement. On peut de plus adapter la vitesse de pivotement du véhicule sur lui-même par sélection des rapports de transmission de la boîte de vitesses 12. On peut également changer le sens de pivotement en passant de marche avant à marche arrière ou inversement au moyen de la boîte de vitesses.

Le véhicule équipé du différentiel selon l'invention peut donc effectuer une gamme complète de braquages allant jusqu'au pivot, c'est-à-dire le virage sur place.

**Revendications**

1.  Système de direction pour véhicule automobile, du type agissant par différence de vitesse entre des roues de gauche et de droite du véhicule et comprenant un différentiel piloté (24) comprenant un arbre d'entrée (22) entraîné par des moyens moteurs (10, 12) de propulsion du véhicule et deux arbres de sortie (26, 28) reliés à des roues de gauche et à des roues de droite respectivement, ainsi que des freins de gauche et de droite (44, 72) agissant indirectement sur les rotations des arbres de sortie précités, caractérisé en ce que ce différentiel (24) comprend trois trains parallèles (32, 34, 36) d'engrenages planétaires comprenant chacun un pignon planétaire (38), des pignons satellites et une couronne extérieure, les pignons planétaires (38) de ces trois trains d'engrenages étant solidaires en rotation les uns des autres et reliés fixement à un arbre (40) sur lequel agit l'un des freins (44) précités, les moyens moteurs (10, 12) de propulsion du véhicule étant reliés au porte-satellite (54) d'un premier et d'un deuxième de ces trains d'engrenages dont les couronnes extérieures (50, 58) sont reliées aux arbres de sortie (28, 26) précités, l'autre frein (72) précité agissant sur un arbre (68) entraîné par la couronne extérieure (66) du troisième train (36) d'engrenages.

2.  Système selon la revendication 1, caractérisé en ce que le premier (32) des trains d'engrenages précités est du type "Ravigneaux", comprenant deux séries de pignons satellites (46, 48) en prise, portés par un même porte-satellite (54) et interposés entre le pignon planétaire (38) et la couronne extérieure (50) de ce train d'engrenages.

3.  Système selon la revendication 1 ou 2, caractérisé en ce que le deuxième et le troisième trains d'engrenages (34, 36) sont du type plan, comprenant une série de pignons satellites (56, 64) interposés entre un pignon planétaire (38) et une couronne extérieure (58, 66), le porte-satellite (60) du deuxième train (34) étant solidaire en rotation de celui du premier train (32), le porte-satellite (74) du troisième train (36) étant solidaire de la couronne extérieure (58) du deuxième train (34).

4.  Système selon l'une des revendications précédentes, caractérisé en ce que le porte-satellite (54) du premier train (32) est relié aux moyens moteurs de propulsion (10, 12) par un arbre tubulaire (22) à l'intérieur duquel s'étend l'arbre (40) relié aux pignons planétaires (38) des trois trains d'engrenages.

5.  Système selon l'une des revendications précédentes, caractérisé en ce qu'il comprend des moyens (80, 82) pour désolidariser les moyens moteurs (10, 12) du porte-satellite (54) des deux premiers trains et pour les relier à l'arbre (40) portant les pignons planétaires (38), pour permettre aux arbres de sortie (26, 38) de tourner en sens contraire l'un de l'autre.

6.  Système selon la revendication 5, caractérisé en ce qu'il comprend des moyens (84, 86) d'immobilisation en rotation du porte-satellite (54) des deux premiers trains d'engrenages, pour permettre un virage sur place du véhicule.

7.  Système selon la revendication 5 ou 6, caractérisé en ce que les moyens précités utilisés pour désolidariser le porte-satellite (54) des moyens moteurs (10, 12) et pour l'immobiliser en rotation comprennent des accouplements du type à crabots.

**Claims**

1.  A steering system for an automotive vehicle, of the type which acts through the difference in speed between the left side wheels and the right side wheels of the vehicle and which comprises a controlled differential gear (24) incorporating an input shaft (22) driven by the driving means (10, 12) to propel the vehicle and two output shafts (26, 28) which are respectively connected to the left side wheels and the right side wheels of the vehicle, as well as left side and right side brakes (44, 72) which act indirectly on the rotation of the aforementioned output shafts, characterised in that this differential gear (24) comprises three parallel differential change planet gears (32, 34, 36) each comprising a planet wheel (38), drive pinion wheels and an outer ring gear, the planet wheels (38) of these three differential change gears being integral in rotation with one another and connected in a fixed position to a shaft (40) upon which one of the aforementioned brakes (44) act, the driving means (10, 12) to propel the vehicle being connected to the carrier pinions (54) of a first and second of these differential change gears whose outer ring gears (50, 58) are connected to the aforementioned output shafts (28, 26), the other brake (72) acting on a shaft (68) driven by the outer ring gear (66) of the third differential change gear (36).

2.  A system according to Claim 1, characterised in that the first (32) of the afore-mentioned differential change gears is of the "Ravigneaux" type, comprising two series of meshed drive pinion wheels '46, 48), carried by a same carrier pinion (54) and placed between the planet wheel (38) and the outer ring gear (50) of this differential change gear.

3. A system according to Claim 1 or 2, characterised in that the second and third differential change gears ((34, 36) are of the plane type, comprising a series of drive pinions (56, 64) placed between the planet wheel (38) and an outer ring gear (58, 66), the carrier pinion (60) of the second differential change gear (34) being integral in rotation with that of the first differential change gear (32), the carrier pinion (74) of the third differential change gear (36) being integral with the outer ring gear (58) of the second differential change gear (34).

4. A system according to one of the above Claims, characterised in that the carrier pinion (54) of the first differential change gear (32) is connected to the driving propulsion means (10, 12) by a tubular shaft (22) inside which the shaft (40) connected to the planet wheel (38) of the three differential change gears extends.

5. A system according to one of the above Claims, characterised in that it comprises means (80, 82) to uncouple the driving means (10, 12) from the carrier pinion (54) of the first two differential change gears and to connect them to the shaft (40) carrying the planet wheels (38), thus enabling the output shafts (26, 28) to be turned in opposite directions to one another.

6. A system according to Claim 5, characterised in that it comprises means (84, 86) to immobilize the carrier pinions (54) of the first two differential change gears in rotation, thus enabling the vehicle to turn on the spot.

7. A system according to Claim 5 or 6, characterised in that the aforementioned means used to uncouple the carrier pinion (54) from the driving means (10, 12) and to immobilize it in rotation comprise couplings of the claw type.

**Patentansprüche**

1. Lenksystem für Automobilfahrzeuge des Typs, das durch einen Geschwindigkeitsunterschied zwischen den linken und den rechten Rädern des Fahrzeugs wirkt und ein gesteuertes Differential (24) umfaßt, mit einer Eingangswelle (22), die von den Antriebsmitteln (10, 12) des Fahrzeugs angetrieben wird und mit zwei Ausgangswellen, (26, 28), die mit den linken und den rechten Rädern verbunden sind sowie rechte und linke Bremsen (44, 72), die indirekt auf die Drehungen der oben genannten Ausgangswellen einwirken, gekennzeichnet dadurch, daß das Differential (24) drei Gruppengetriebe (32, 34, 36) mit Planetengetrieben umfaßt, die jeweils ein Planetenrad (38), Satellitenräder und einen Außenkranz aufweisen, wobei die Planetenräder (38) dieser drei Gruppengetriebe in Drehung fest miteinander verbunden und stationär auf einer Welle (40) verbunden sind, auf die eine der oben genannten Bremsen (44) einwirkt, wobei die Antriebsmittel (10, 12) des Fahrzeugs mit dem Satellitenträger (54) eines ersten und eines zweiten dieser Gruppengetriebe verbunden sind, deren Außenkränze (50, 58) mit den oben genannten Ausgangswellen (28, 26) verbunden sind, während die andere oben genannte Bremse (72) auf eine Welle (68) einwirkt, die vom Außenkranz (66) des dritten Gruppengetriebes (36) angetrieben wird.

2. System gemäß dem Anspruch 1, gekennzeichnet dadurch, daß das erste der Gruppengetriebe (32) ein "Ravigneaux"-Getriebe ist, das zwei Satellitenräderserien (46, 48) umfaßt, die ineinandergreifen, von einem gleichen Satellitenträger (54) getragen wird und zwischen dem Planetenrad (38) und dem Außenkranz (50) dieses Gruppengetriebes angebracht ist.

3. System gemäß dem Anspruch 1 oder 2, gekennzeichnet dadurch, daß das zweite und das dritte Gruppengetriebe (34, 36) ebene Getriebe sind, die eine Serie Satellitenräder (56, 64) aufweisen, die zwischen ein Planetenrad (38) und einen Außenkreis (58, 66) montiert sind, während der Satellitenträger (60) des zweiten Gruppengetriebes (34) fest in Drehung mit dem des ersten Gruppengetriebes (32) verbunden ist, und der Satellitenträger (74) des dritten Gruppengetriebes (36) fest mit dem Außenkranz (58) des zweiten Gruppengetriebes (34) verbunden ist.

4. System gemäß einem der oben genannten Ansprüche, gekennzeichnet dadurch, daß der Satellitenträger (54) des ersten Gruppengetriebes (32) mit den Antriebsmitteln (10, 12) über eine Hohlwelle (22) verbunden ist, in derem Inneren sich die Welle (40) erstreckt, die mit den beiden Planetenrädern (38) der drei Gruppengetriebe verbunden ist.

5. System gemäß einem der oben genannten Ansprüche, gekennzeichnet dadurch, daß es Mittel (80, 82) zum Trennen der Antriebsmittel (10, 12) vom Satellitenträger (54) der beiden ersten Gruppengetriebe umfaßt und um diese mit der Welle (40) zu verbinden, die die Planetenräder (38) trägt, um es den Ausgangswellen (26, 38) zu ermöglichen, in die zu einander entgegengesetzte Richtung zu drehen.

6. System gemäß dem Anspruch 5, gekennzeichnet dadurch, daß es Mittel (84, 86) zum Arretieren der Drehung des Satellitenträgers (54) der beiden ersten Gruppengetriebe umfaßt, um das Wenden an Ort und Stelle des Fahrzeugs zu ermöglichen.

7. System gemäß dem Anspruch 5 oder 6, gekennzeichnet dadurch, daß die oben genannten Mittel zum Trennen des Satellitenträgers (54) von den Antriebsmitteln (10, 12) und zum Arretieren in Drehung Klauenkupplungen umfassen.

FIG.1

FIG.2